# NEUE EUROPÄISCHE PATENTSCHRIFT

(11) **EP 2 105 226 B2**
(45) Veröffentlichungstag und Bekanntmachung des Hinweises auf die Entscheidung über den Einspruch: **25.05.2016**
(45) Hinweis auf die Patenterteilung: 31.08.2011
(21) Anmeldenummer: 08005538.7
(22) Anmeldetag: 25.03.2008
(51) Int. Cl.: B23B 31/16, B23B 31/28, B23Q 3/152

(54) **Magnetspannfutter**
Magnet chuck
Mandrin magnétique

(43) Veröffentlichungstag der Anmeldung: 30.09.2009
(73) Patentinhaber: Schunk GmbH & Co. KG Spann- und Greiftechnik, 74348 Lauffen am Neckar (DE)
(72) Erfinder: Übele, André, 71546 Aspach (DE)
(74) Vertreter: Paul, Dieter-Alfred

(56) Entgegenhaltungen:
- WO-A-2006/001038
- DE-A1- 10 049 070
- US-A- 2 741 481
- US-A- 2 769 642

## Beschreibung

Die vorliegende Erfindung betrifft ein Magnetspannfutter mit einem Futterkörper, der an seiner vorderen Stirnseite eine Spannfläche für ein zu fixierendes Bauteil aufweist, und mit elektromagnetischen Spannmitteln zur Fixierung eines Bauteils an der Spannfläche.

Magnetspannfutter dieser Art sind bekannt und werden in der Praxis beispielsweise eingesetzt, um zu bearbeitende Werkstücke an der Arbeitsspindel einer Drehmaschine, Rundschleifmaschine oder dergleichen zu fixieren. Herkömmliche Magnetspannfutter bestehen aus einem Futterkörper, der mit seiner rückseitigen Stirnfläche an der Arbeitsspindel der jeweiligen Werkzeugmaschine fixiert wird und an seiner Vorderseite eine Vielzahl von Elektromagneten trägt, die in radialer Richtung ausgerichtet und in der Umfangsrichtung des Futterkörpers im gleichmäßigen Versatz zueinander angeordnet sind. Die Anordnung ist dabei so gewählt, dass im Wechsel ein Nordpol und ein Südpol nebeneinander liegen.

Die bekannten Magnetspannfutter haben sich in der Praxis bewährt. Es wird jedoch zum Teil als nachteilig angesehen, dass es zum Teil relativ aufwendig ist, ein durch Drehen oder Rundschleifen zu bearbeitendes Werkstück positionsgenau an dem Magnetspannfutter zu fixieren.

Aus der WO2006/001038 ist ein Magnetspannfutter mit Zentriermitteln bekannt.

Aufgabe der vorliegenden Erfindung ist es daher, ein Magnetspannfutter der eingangs genannten Art so auszugestalten, dass eine einfache und automatisierbare Bauteilpositionierung möglich ist.

Diese Aufgabe ist erfindungsgemäß durch die Merkmale der Ansprüche 1 und 10 gelöst.

Im Betrieb wird ein zu bearbeitendes Werkstück auf der Werkstückaufiage bzw. der Spannfläche des Magnetspannfutters abgelegt. Über den Stellmechanismus werden im Anschluss die Zentrierbacken an das Werkstück heranbewegt, so dass dieses feinfühlig gehalten und zentriert wird. Anschließend werden die Magnetspannmittel betätigt und so das Werkstück auf der Spannfläche über magnetische Haltekräfte gespannt.

Wenn die Werkstückkontur es zulässt, können die Zentrierbacken am Werkstück angelegt bleiben. Wenn hingegen die Zentrierfläche des Werkstücks bearbeitet werden muss, oder das Werkstück verformungsempfindlich ist, können die Zentrierbacken auch vom Werkstück weggefahren werden. Der Hub ist zweckmäßigerweise so groß gewählt, dass die Zentrierfläche bearbeitet werden kann. Allerdings ist das Werkstück dann nicht mehr gegen verschieben gesichert. Wenn die Werkstückgeornetrie günstig ausgeführt ist, so dass die Haltekräfte der Magnetspannmittel eine sichere Spannung gewährleisten sind keine zusätzlichen Sicherungsmaßnahmen erforderlich

Bei ungünstiger Werkstückgeometrie und wenn die Zentrierbacken weggefahren werden müssen, sollte das Werkstück gegen starke Verschiebewege gesichert werden, da sonst das Werkstück oder Werkzeug zerstört werden kann. Hierzu kann vorgesehen sein, dass die Zentrierbacken an ihrer von der Spannfläche wegweisenden Oberseite einen nach oben abragenden zapfen tragen, der bei einer Außenbearbeitung eines Werkstücks nahe von dessen Innenfläche positionierbar ist, um das Werkstück gegen Verschiebungen zu sichern.

Weiterhin kann der Stellmechanismus als Keilstangenmechanismus ausgebildet sein, der Keilstangen besitzt, die in unterhalb der Führungsnuten für die Zentrierbacken vorgesehenen Taschen des Futterkörpers geführt sind und über entsprechende Verzahnungen oder dergleichen mit den Zentrierbacken in Eingriff stehen.

Ein solcher Keilstangenmechanismus kann wie bei einem Handspannfutter handbetätigt sein. In bevorzugter Weise wird der Keilstangenmechanismus jedoch kraftbetätigt. Entsprechende Mechanismen sind in unterschiedlichen Ausführungsformen zur Betätigung der Spannbacken von Kraftspannfuttern bekannt, so dass eine detaillierte Beschreibung nicht erforderlich scheint.

Gemäß einer bevorzugten Ausführungsform der Erfindung sind jedoch die Zentrierbacken um einem zentral in dem Futterkörper angeordneten und parallel zu der Futterlängsachse verstellbaren Kolben in der Weise gekoppelt, dass eine Axialbewegung des Kolbens in eine Radialbewegung der Zentrierbacken umgesetzt wird.

Dabei bestehen die Zentrierbacken zweckmäßigerweise aus einer Grundbacke, welche in einer entsprechenden Führungsnut des Futterkörpers geführt ist, und einer darauf fixierten Aufsatzbacke, welche die Zentrierfläche bildet. Damit besitzen die Zentrierbacken im Prinzip den gleichen Aufbau wie die Spannbacken, wie sie in der Regel bei herkömmlichen Dreibackenfuttern oder dergleichen eingesetzt werden.

In Ausgestaltung dieser Ausführungsform ist vorgesehen, dass die Grundbacken in ihrer Längsrichtung unterteilt sind in ein erstes Grundbackenelement, welches Kopplungsmittel zur Verbindung mit dem Kolben trägt, und ein zweites Grundbackenelement, welches die Aufsatzbacke trägt, wobei die beiden Grundbackenelemente in der weise miteinander gekoppelt sind, dass sie zum Ausgleich von Fertigungstoleranzen relativ zueinander verstellt und/oder verschwenkt und/oder verkippt werden können. Auf diese Weise können Flucht- und Teilungsfehler ausgeglichen werden, die ein präzises und feinfühliges Bewegen der Zentrierbacken erschweren würden und dadurch bedingt sind, dass die Führungsbahnen der Zentriermittel und die Führungsbahnen im Magnetspannfutter getrennt voneinander sind.

Beispielsweise können die beiden Grundbackenelemente durch einen Gelenkbolzen schwenkend miteinander verbunden sein, welcher in die Grundbackenelemente parallel zur Futterachsrichtung eingesetzt ist Die Anordnung ist dabei zweckmäßigerweise so getroffen dass die beiden Grundbackenelemente radial in Bewegungsrichtung über den Gelenkbolzen passgenau geführt sind, jedoch um die Achse des Gelenkbolzens, die parallel zur Futterlängsachse verläuft, gegeneinander bewegt werden können. In Richtung der Futterlängsachse kann ein konstruktiver Spalt zwischen den Grundbackenelementen vorgesehen sein, so dass ein Versatz der jeweiligen Führungen keinen Zwang auf die Bauteile ausübt.

Gemäß einer bevorzugten Ausführungsform der Erfindung ist vorgesehen, dass der Kolben in einem Pneumatik- oder Hydraulikzylinder verschiebbar angeordnet ist, der in eine zentrale Bohrung des Futterkörpers von dessen Unterseite her eingesetzt und daran fixiert, insbesondere eingeschraubt ist Auf diese weise bildet der Kolben mit seiner Betätigungseinheit ein Modul, das vorgefertigt und einfach montiert werden kann.

In weiterer Ausgestaltung dieser Ausführungsform kann vorgesehen sein, dass der Kolben an seinem aus dem Pneumatik- bzw. Hydraulikzylinder herausragenden Ende einen Kolbenfortsatz trägt, der mit dem Kolben lösbar verbunden, insbesondere verschraubt ist, und der Kolbenfortsatz mit den Zentrierbacken gekoppelt ist. In diesem Fall ist der Kolbenfortsatz zweckmäßigerweise in einem Führungskörper verschiebbar gehalten, der in die zentrale Bohrung des Futterkörpers von dessen Oberseite her eingesetzt und daran fixiert, insbesondere eingeschraubt ist.

Gemäß dieser Ausführungsform bilden der Führungskörper, der Kolbenfortsatz und die damit gekoppelten Grundbakkenelemente ebenfalls ein geschlossenes Modul, das vorgefertigt und von der Oberseite her montiert werden kann. Somit kann die Montage des erfindungsgemäßen Magnetspannfutters in einfacher Weise erfolgen, indem das erste Modul in die zentrale Bohrung des Futterkörpers von dessen Unterseite her und das zweite Modul in die zentrale Bohrung des Futterkörpers von dessen Oberseite her eingeschraubt wird. Anschließend werden die beiden Module miteinander verbunden, indem der Kolben und der Kolbenfortsatz beispielsweise durch eine zentrale Schraube aneinander fixiert werden.

Bei einer weiteren Ausführungsform der vorliegenden Erfindung ist vorgesehen, dass die Führungsnuten zur Spannfläche derart weit geöffnet sind, dass die Zentrierbacken mit daran ausgebildeten Führungsstegen in die Führungsnuten einsetzbar sind, wobei die offenen Oberseiten der Führungsnuten durch Sicherungsleisten, welche die Führungsstege der Zentrierbacken übergreifen, unter Freilassung eine Bewegungsbahn für die Zentrierbacken verschlossen sind. Beispielsweise können hierzu in Führungsstegen der Führungsnuten sowie in den Führungsstegen der Zentrierbacken korrespondierende Durchgangsöffnungen ausgebildet sein, wobei dann die Sicherungsleisten von der Unterseite der Führungsnuten her an dem Futterkörper durch Befestigungsschrauben, welche die Durchgangsöffnungen durchgreifen, festgeschraubt werden. Die Durchgangsöffnungen müssen dabei so ausgebildet sein, dass sie eine Axialbewegung der Zentrierbacken erlauben. Die Ausbildung der Durchgangsöffnungen zwischen den Führungsstegen von Führungsnut und Zentrierbacke erlaubt eine platzsparende Bauweise, so dass ausreichend Platz für die Magnete zur Verfügung steht Alternativ können die Durchgangsöffnungen auch nur in den Führungsstegen der Führungsnut ausgebildet sein.

Hinsichtlich weiter vorteilhafter Ausgestaltung der Erfindung wird auf die Unteransprüche sowie nachfolgende Beschreibung eines Ausführungsbeispiels unter Bezugnahme auf die beiliegenden Zeichnungen verwiesen. In der Zeichnung zeigt
- Figur 1: eine Ausführungsform eines erfindungsgemäßen Magnetspannfutters in perspektivischer Ansicht
- Figur 2: das Magnetspannfutter aus Figur 1 in einem Längsschnitt durch eine Führungsnut,
- Figur 3: das Magnetspannfutter aus Figur 1 mit einem ge- spannten Bauteil und geöffneten Zentrierbacken,
- Figur 4: das Magnetspannfutter in vergrößerter Darstel- lung einen Schnitt durch eine Werkstückauflage des Magnetspannfutters aus Figur 3,
- Figur 5: ein Teilelement einer Grundbacke zu einer Zen- trierbacke des Magnetspannfutters aus Figur 1,
- Figur 6: eine Aufsatzbacke der Zentrierbacke des Magnet- spannfutters aus Figur 1 in perspektivischer Darstellung,
- Figur 7: eine alternative Ausführungsform einer Aufsatz- backe der Zentrierbacke,
- Figur 8: einen der Figur 2 entsprechenden Längsschnitt durch das Magnetspannfutter von Figur 1. das mit der Zentrierbacke aus Figur 7 ausgestattet ist,
- Figur 9: das Magnetspannfutter aus Figur 8 in Schnittdarstellung mit angestellte Werkzeug.
- Figur 10: in schematicher Ansicht eine alternative Ausführungsform eines erfindungsgemäßen Magnetspannfutters in Draufsicht,
- Figur 11: das Magnetspannfutter aus Figur 10 im Längsschnitt durch eine Führungsnut,
- Figur 12: einen Querschnitt durch eine Führungsnut in vergrößerter Darstellung.
- Figur 13: einen Ausschnitt eines Magnetspannfutters auf Figur 10 in Draufsicht mit entfernten Zentrier- backen und
- Figur 14 und Figur 15: perspektivische Darstellungen einer Grundbacke des Magnetspannfutters aus Figur 10

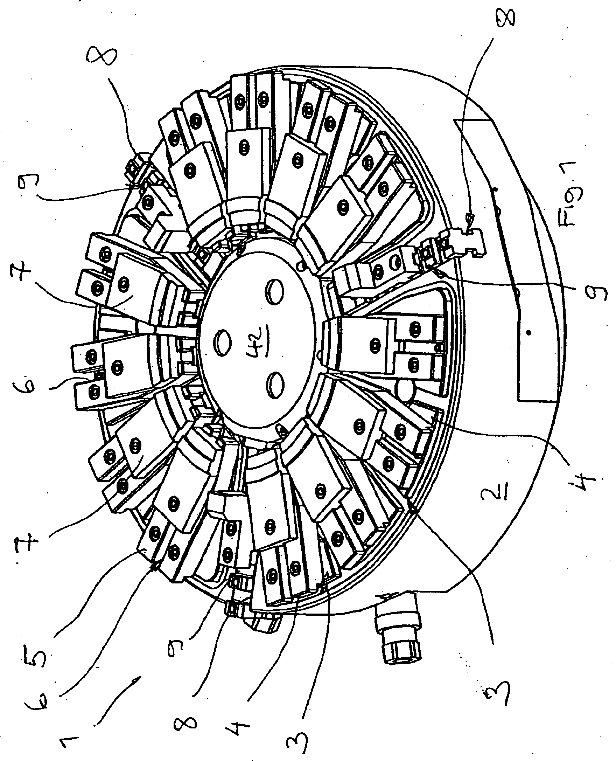

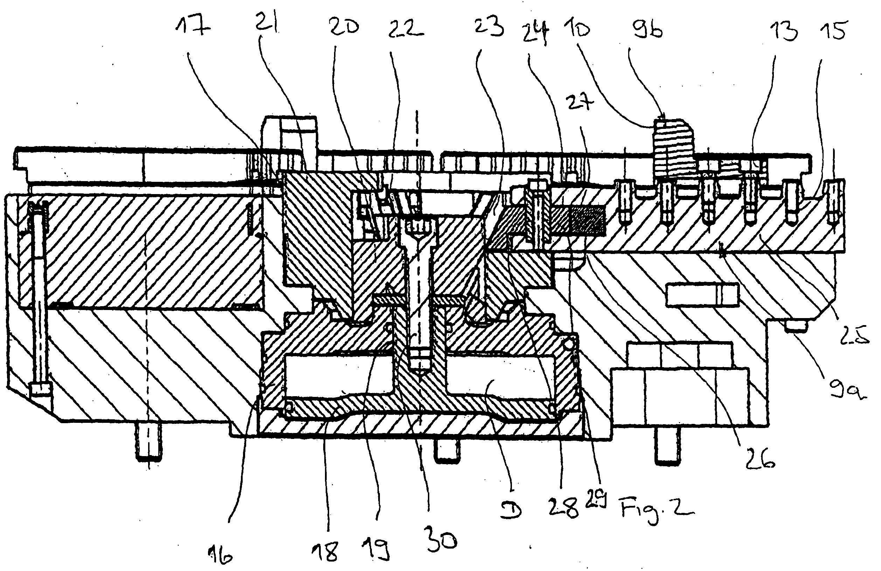

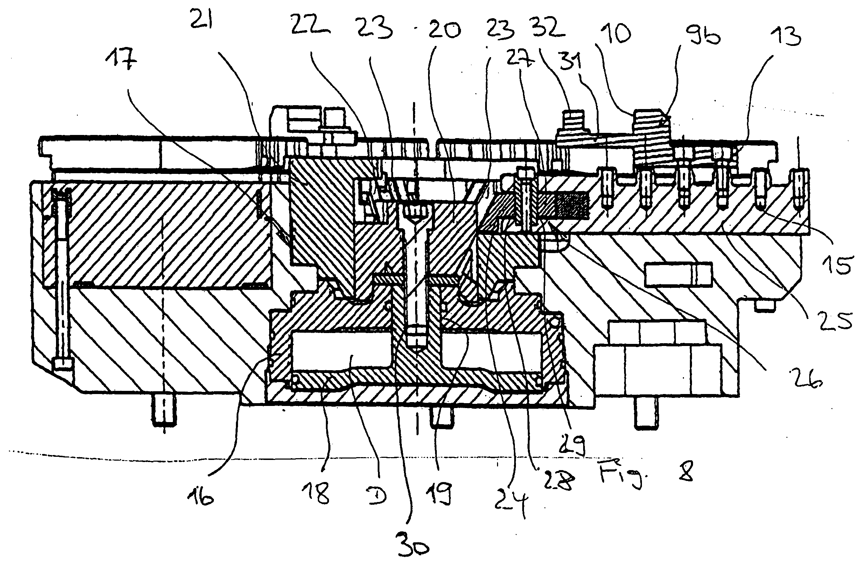

In den Figuren 1 bis 9 ist ein Magnetspannfutter gemäß der vorliegenden Erfindung dargestellt, wie es beispielsweise zum Spannen von Werkstucken an Drehmaschinen oder Rundschleifmaschinen verwendet wird. Zu dem Magnetspannfuttern 1 gehört ein Futterkörper 2, der eine zylindrische Grundform besitzt und an der nicht dargestellten Spindel eine Werkzeugmaschine befestigt werden kann. An der vorderen Stirnseite des Futterkörpers 2 sind insgesamt 12 Elektromagnete 3 vorgesehen, die in der Umfangsrichtung des Futterkörpers 2 nebeneinanderliegend angeordnet sind und im Wesentlichen radial zu der Futterlängsachse ausgerichtet sind. Die Elektromagnete 3 sind jeweils mit einer Abdeckung 4 versehen, die eine Spannfläche definieren, wie in der Figur 2 dargestellt ist Die Elektrornagnete 3 sind ein- und ausschaltbar, um ein zu bearbeitendes Werkstück zu spannen. Auf die Spannfläche sind Leisten 5 aufgesetzt und festgeschraubt. Die Leisten besitzen radiale T-Nuten 6, in denen Werkstückauflageelemente 7 mit Nutensteinen gehalten und beweglich geführt sind.

Zwischen den Elektromagneten 3 sind insgesamt drei radiale Führungsnuten 8 in der Stirnseite des Futterkörpers 2 vorgesehen, die gleichmäßig über den Umfang verteilt, d.h. mit jeweils 120° Versatz gegeneinander angeordnet sind. In den Führungsnuten 8 sind jeweils Zentrierbacken 9 radial verschiebbar geführt. Die Zentrierbacken 9 sind hier zweiteilig ausgebildet und bestehen jeweils aus einer Grundbacke 9a, welche in die zugehörige Führungsnut 8 eingesetzt und darin verschiebbar gehalten ist, und einer an der Oberseite der Grundbacke 9a gehaltenen Aufsatzbacke 9b, welche über die Spannfläche des Magnetspannfutters 1 hinaussteht und an ihrer radial nach innen weisenden Stirnfläche eine Zentrierfläche 10 bildet.

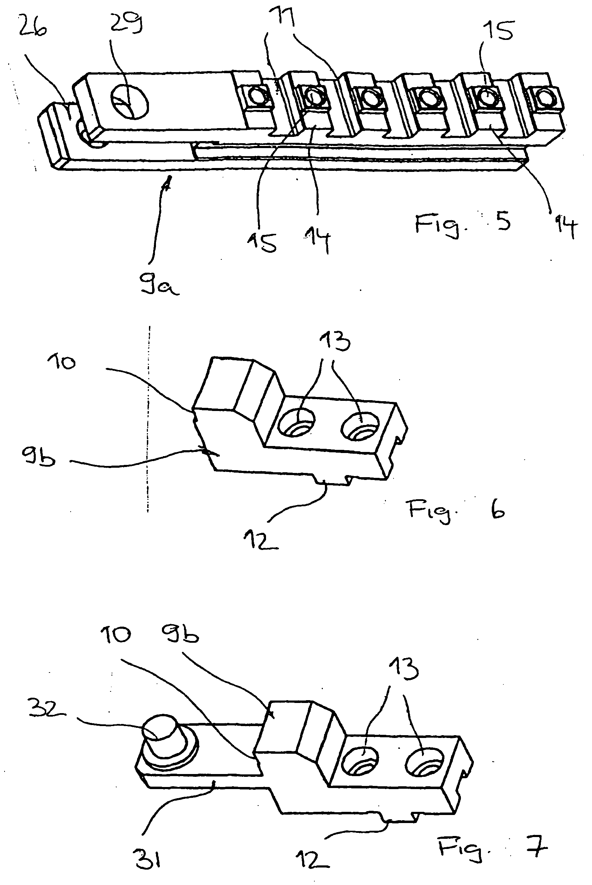

Die Figuren 5 und 6 lassen gut erkennen, dass die Grundbacken 9a an ihrer Oberseite insgesamt fünf mit axialen Versatz zueinander angeordnete Vertiefungen 11 aufweisen und die Aufsatzbacken 9b an ihrer Unterseite einen zu den Vertiefungen 11 korrespondierenden Fortsatz 12 besitzen, so dass die Aufsatzbacken 9b an fünf vorgegebenen Positionen an der jeweiligen Grundbacke 6a positioniert werden können. Die Figuren 5 und 6 zeigen weiterhin, dass die Aufsatzbacken 9b mit zwei Durchgangsbohrungen 13 und die Grundbacke 9a an den zwischen den Vertiefungen 11 gebildeten Stegen 14 mit entsprechenden Gewindebohrungen 15 versehen ist, über welche die Aufsatzbacken 9b an den Grundbacken 9a festgeschraubt werden können.

Die Zentrierbacken 9 können über einen gemeinsamen Stellmechanismus zusammen- und auseinanderbewegt werden.

Der Stellmechanismus umfasst einen Pneumatikzylinder 16, der in eine zentrale Bohrung 17 des Futterkörpers 2 von dessen Unterseite her eingeschraupt ist. In dem Pneumatikzylinder 16 ist ein Kolben 18 unter Bildung von zwei Druckkammern axial verschieblich eingesetzt. Das obere Ende des Kolbens 18 durchgreift eine Durchgangsbohrung 19 an der Oberseite des Pneumatikzylinders 16 und ist mit einem Kolbenfortsatz 20 verbunden, hier verschraubt. Der Kolbenfortsatz 20 ist in einem Führungskörper 21 verschiebbar gehalten, der in die zentrale Bohrung 17 des Futterkörpers 2 von dessen Oberseite her eingeschraubt ist.

Der Kolben 18 trägt im Bereich des aus dem Pneumatikzylinder 16 herausragenden und in dem Führungskörper 21 verschiebbar gehaltenen Kolbenfortsatz 20 an seinem Außenumfang verteilt drei T-formige Keilhaken 22, welche in entsprechende T-förmige Keilnuten 23 an den radial nach innen weisenden Endbereichen der Grundbacken 9 eingreifen Dabei wirken die Keilflächen der Keilnuten 23 und der Keilhaken 22 in der Weise zusammen, dass eine Axialverstellung des Kolbens 18 in eine synchrone Radialbewegung der Zentrierbacken 9 umgesetzt wird.

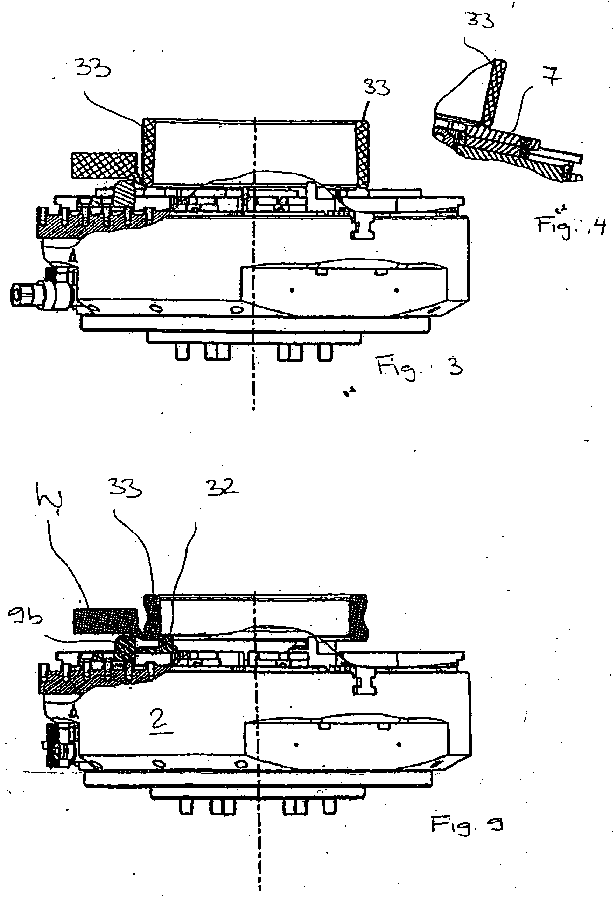

In der Zeichnung befindet sich der Kolben 18 in seiner unteren Endstellung, so dass nur die obere Druckkammer D erkennbar ist. Wenn die Zentrierbacke 9 aus der in Figur 3 dargestellten Ausgangsstellung zusammengefahren werden sollen, wird die untere Druckkammer mit Druck beaufschlagt, so dass der Kolben 18 angehoben wird. Wenn in umgekehrter Richtung die Zentrierbacken 9 auseinandergefahren werden sollen, wird die Oberdruckkammer D mit Druck beaufschlagt und die untere Druckkammer entlastet, so dass der Kolben 18 abgesenkt wird.

Wie insbesondere in der Figur 2 erkennbar ist, sind die Grundbacken 9a axial geteilt ausgeführt und bestehen aus einem ersten, radial inneren Grundbackenelement 24, an welchem die mit dem Kolben 18 gekoppelte Keilnut 22 ausgebildet ist, und einem radial äußeren zweiten Grundbakkenelement 25, welches die Aufsatzbacken 9b trägt. Die beiden Grundbackenelemente 24, 25 sind ineinander gesteckt. Konkret weist das äußere zweite Grundbackenelement 25 an seinem inneren Ende eine seitlich offene Ausnehmung 26 auf, in welche ein entsprechender Fortsatz 27 des ersten Grundbackenelementes 24 eingreift. Die Verbindung der beiden Grundbackenelemente 24, 25 erfolgt durch einen Gelenkbolzen 28, der eine Durchgangsbohrung 29 in dem Fortsatz 27 des ersten Grundbackenelements 24 durchgreift und an dem zweiten Grundbackenelement 25 fixiert, hier festgeschraubt ist. Die Anordnung ist dabei so getroffen, dass die beiden Grundbackenelemente 24, 25 radial in Bewegungsrichtung über den Gelenkbolzen 28 passgenau geführt sind, jedoch um die Achse des Gelenkbolzens 28, die parallel zur Futterlängsachse X verläuft, gegeneinander bewegt werden können. In Richtung der Futterlängsachse X ist ein konstruktiver Spalt zwischen den Grundbackenelementen 24, 25 vorgesehen, so dass ein Versatz der jeweiligen Führungen keinen Zwang auf die Bauteile ausübt. Ein Versatz senkrecht zur Futterlängsachse X der Führungsnuten 5 wird dadurch kompensiert, dass im ersten Grundbackenelement 24 ein Langloch vorgesehen ist. Dem gegenüber ist an dem Gelenkbolzen 28 eine in der Zeichnung nicht erkennbare Schlüsselfläche vorgesehen, damit keine Linienberührung zwischen Gelenkbolzen 28 und dem ersten Grundbackenelement 24 auftritt.

Bei dem erfindungsgemäßen Magnetspannfutter ist der Stellmechanismus modular ausgeführt, wobei er aus einem ersten Baumodul bestehend aus dem Pneumatikzylinder 16 und dem darin gehaltenen Kolben 18 sowie einem zweiten Modul bestehend aus dem Führungskörper 21 mit dem darin verschiebbar gehaltenen Kolbenfortsatz 20 und den mit dem Kolbenfortsatz 20 verbundenen inneren Grundbackenelementen 24 gebildet ist. Die Montage erfolgt in einfacher weise, indem das erste Modul in die zentrale Bohrung 17 des Futterkörpers 2 von dessen Unterseite her eingeschraubt wird. Anschließend wird das zweite Modul in die zentrale Bohrung 17 des Futterkörpers 2 von dessen Oberseite her eingesetzt und fixiert, indem der Führungskörper 21 in der Bohrung 17 festgeschraubt wird. Anschließend werden die beiden Module miteinander verbunden, indem der Kolben 18 und der Kolbenfortsatz 20 durch die zentrale Schraube 30 aneinander fixiert werden Nachdem der Stellmechanismus auf diese Weise montiert wurde, werden die zweiten Grundbackenelemente 25 in die Führungsnuten 8 radial von außen eingeschoben und über die Gelenkbolzen 28 mit den ersten Grundbackenelementen 24 verbunden. Das so fertiggestellte Spannfutter wird mit einer in Figur 1 dargestellten Abdeckung 42 gegen Schmutz und Späne geschützt.

Wenn mit dem Magnetspannfutter 1 ein Bauteil gespannt werden soll, wird dieses Bauteil auf den Werkstückauflagenelementen 7 positioniert (siehe Figur 4) und anschließend der Kolben 18 betätigt, um die Zentrierbacken 9 zusammenzufahren, wodurch das Bauteil zentrisch zu der Futterlängsachse X ausgerichtet wird. Anschließend werden die Elektromagnete 3 eingeschaltet, so dass das Bauteil an dem Futterkörper 2 fixiert wird. Wenn die Werkstückkontur es zulässt, können die Zentrierbacken 9 am Werkstück angelegt bleiben. Wenn jedoch beispielsweise die Zentrierfläche des Werkstücks bearbeitet werden muss oder das Werkstück verformungsempfindlich ist, können die Zentrierbacken 9 auch vom Werkstück weggefahren werden. Der Hub des Kolbens 18 ist so bemessen, dass die Spannfläche dann bearbeitet werden kann (siehe Figur 3). Allerdings ist in diesem Fall das Werkstück nicht mehr gegen Verschieben gesichert. Wenn die Werkstücke geometriegünstig sind, so dass die Haltekräfte des Magnetspannfutters eine sichere Fixierung des Werkstücks gewährleisten, sind keine Sicherungsmaßnahmen erforderlich. Wenn jedoch bei ungünstiger werkstückgeometrie die Zentrierbacken 9 weggefahren werden müssen, sollte das Werkstück gegen starke Verschiebewege gesichert werden, da ansonsten das Werkstück oder Werkzeug zerstört werden können. Für diesen Fall können die Magnetspannfutter mit alternativen Zentrierbacken 9 ausgerüstet werden, wie sie in den Figuren 7 bis 9 dargestellt sind. Die Grundbacken 9a sind dabei unverändert, jedoch weisen die Aufsatzbacken 9b zusätzlich einen radial nach innen vorspringenden Fortsatz 31 auf, der an seiner Oberseite einen nach oben, d.h. von der Spannfläche weg gerichteten Zapfen 32 trägt (siehe Figur 7). Diese Zapfen dienen als Sicherungselemente.

Wenn ein Bauteil in seinem gesamten Umfang bearbeitet werden soll, wie es beispielsweise bei dem inneren Kugellagerring 33 der Fall ist, wie in der Figur 9 dargestellt ist, wird dieses auf den Werkstückauflageelementen 7 positioniert. Anschließend werden die Zentrierbacken 9 aus ihrer äußeren Position nach innen verstellt, so dass ihre Zentrierflächen 10 an dem Werkstück außenseitig in Anlage kommen und dieses zentrieren Anschließend wird das Werkstück magnetisch fixiert.

Nach erfolgter Fixierung des Werkstücks 33 werden die Zentrierbacken 9 wieder so weit auseinander gefahren, dass eine einwandfreie Bearbeitung über das Werkzeug W möglich ist. Die Aufsatzbacken 9b sind so ausgebildet, dass sie in dieser Position die Zapfen 32 das Werkstück noch nicht berühren, um ungewollte Verspannungen am Werkstück zu vermeiden, sondern mit wenig Spalt positioniert sind und damit eine Verschiebung des Werkstücks in allen Richtungen verhindern können.

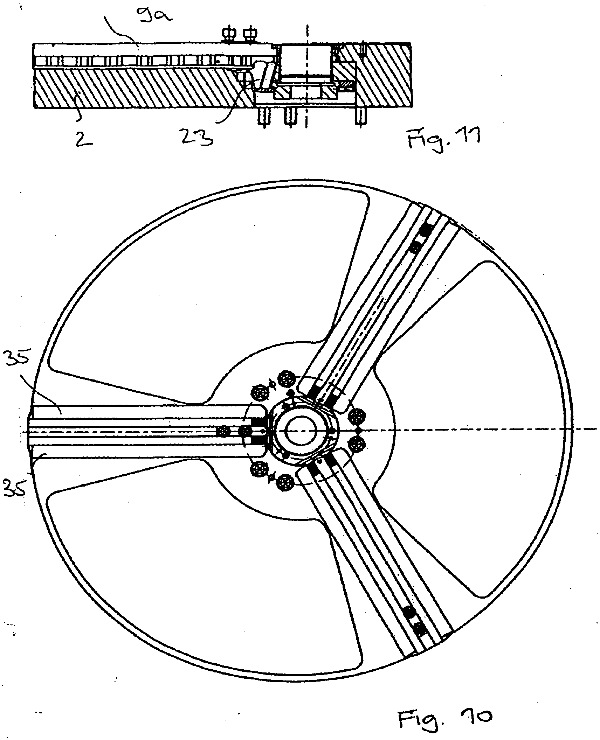

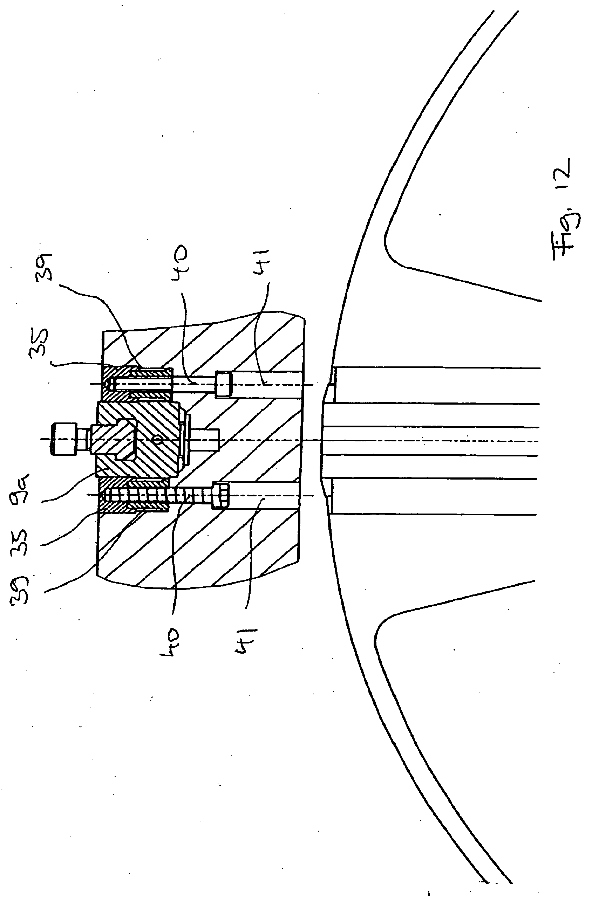

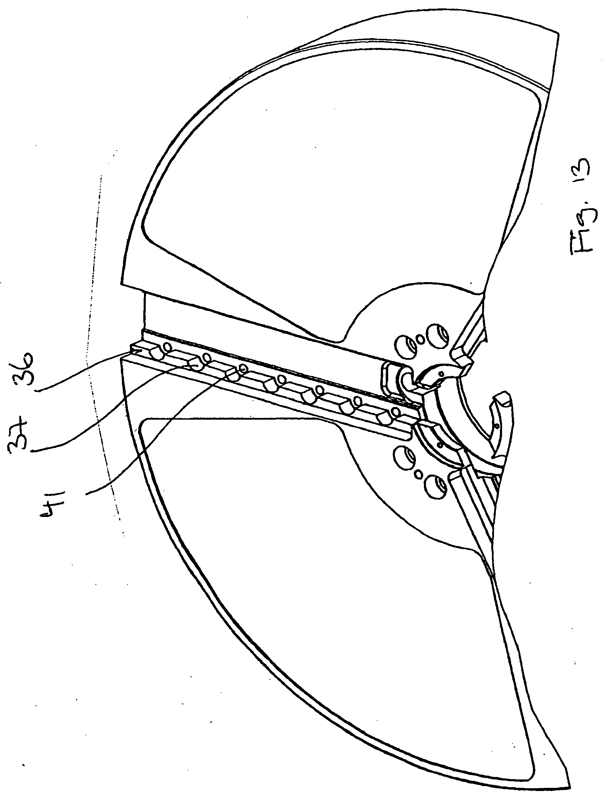

Bei dem zuvor beschriebenen Magnetspannfutter 1 sind die Grundbacken 9a in die Führungsnuten 8 des Futterkörpers 2 radial nach außen eingeschoben. Die Figuren 10 bis 15 zeigen eine alternative Ausführungsform, bei welcher die Grundbacken 9a in die Führungsnuten 8 des Futterkörpers 2 strimseitig eingeselzt sind Hierzu sind die Führungsnuten 8 derart breit ausgebildet dass die Grundbacken 9a mit den daran vorgesehen Führungsstegen 34 in die Führungsnuten 8 von der Stirnseite her eingesetzt werden können. Die Fixierung der Grundbacken 9a in den Führungsnuten 8 erfolgt durch Sicherungsleisten 35, welche nach dem Einsetzen der Grundbacken 9a von der Stirnseite her auf beiden Seiten der Grundbacken 9a in die Führungsnuten 8 eingelegt werden und dabei jeweils einen Führungssteg 35 der Führungsnut 8 sowie den korrespondierenden Führungssteg 34 der Grundbacke 9a übergreifen. Die Sicherungsleisten 35 sind an dem Futterkörper 2 von der Unterseite der Führungsnuten 8 her festgeschraubt wie insbesondere in der Figur 12 gut erkennbar ist. Konkret sind in den Führungsstegen 36 der Führungsnuten 8 in regelmäßigen Abständen halbkreisförmige Durchbrechungen 37 und in den Führungsstegen 34 der Grundbacken 9a zu den Durchbrechungen 37 korrespondierende, in Führungsrichtung länglich ausgebildete Ausnehmungen 38 vorgesehen. In die von den Durchbrechungen 37 und den Ausnehmungen 38 gebildeten Durchgangsöffnungen sind Distanzhülsen 39 eingesetzt, welche von Befestigungsschrauben 40 durchgriffen werden, die durch entsprechende Bohrungen 41 im Futterkörper 2 unterhalb der Führungsnuten 8 eingeschoben und in die Sicherungsleisten 35 eingeschraubt sind.

Bei dieser Ausführungsform wird der Verstellweg durch die Länge der Durchbrechungen 37 in den Führungsstegen 34 der Grundbacken 9a bestimmt. Konkret ergibt sich der Verstellweg durch die Länge der Durchbrechung 37 abzüglich des Durchmessers der Distanzhülse 39. Die Ausbildung der Durchgangsöffnungen zwischen den Führungsstegen der Führungssnuten 8 und der Grundbacken 9a erlaubt es, die Führungsbacken mit geringer Breite und damit platzsparend vorzusehen. Damit steht ausreichend Platz für die Elektromagnete 3 zur Verfügung.

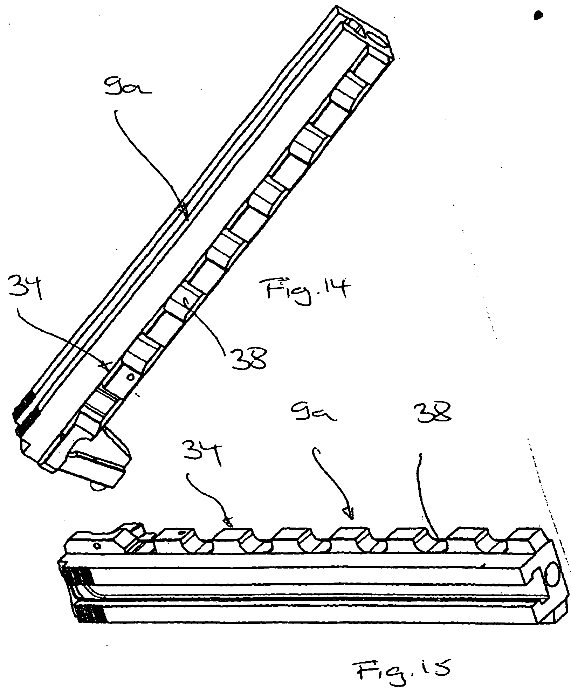

Wie die Figuren 14 und 15 erkennen lassen, sind bei dieser Ausführungsform die Grundbacken 9a einteilig ausgebildet, da es nicht erforderlich ist. Winkelversätze zwischen den Führungsbahnen auszugleichen.

## Patentansprüche

1. Magnetspannfutter mit einem Futterkörper (2), der an seiner vorderen Stirnseite eine Spannfläche für ein zu fixierendes Bauteil aufweiset, und mit elektromagnetischen Spannmitteln (3) zur Fixierung eines Bauteils an der Spannfläche, wobei Zentriermittel vorgesehen sind, um ein Bauteil relativ zu einer zentralen Futterachse (x) des Magnetspannfutters zu zentrieren, wobei in der Spannfläche zwischen den elektromagnetischen Spannmitteln (3) wenigstens drei mit gleichem Winkelversatz zueinander angeordnete, radial zu der Futterlängsachse (X) ausgerichtete Führungsnuten (8) ausgebildet sind, in denen Zentrierbacken (9) radial verschiebbar geführt sind, wobei die Zentrierbacken (9) durch einen Stellmechanismus gemeinsam verstellt werden können und die Zentrierbacken (9) jeweils eine im Futterkörper (2) geführte Grundbacke (9a) und eine die Zentrierfläche aufweisende Aufsatzbacke (9b) aufweisen, wobei die Aufsatzbacken (9b) an ihrer radial nach innen weisenden Seite eine Zentrierfläche (10) bilden und zusätzlich einen radial nach innen vorspringenden Fortsatz (31) aufweisen, der an seiner von der Spannfläche weg weisenden Oberseite einen nach oben abragenden Zapfen (32) trägt der bei einer Außenbearbeitung eines Werkstücks nahe von dessen Innenfläche positionierbar ist, um das Werkstück gegen Verschiebungen zu sichern.

2. Magnetspannfutter nach Anspruch 1, **dadurch gekennzeichnet, dass** der Stellmechanismus als Keilstangenmechanismus ausgebildet ist, wobei der Keilstangenmechanismus Keilstangen besitzt, die in unterhalb der Führungsnuten (8) für die Zentrierbacken (9) vorgesehenen Taschen des Futterkörpers (2) geführt sind und über entsprechende Verzahnungen oder dergleichen mit den Zentrierbacken (9) in Eingriff stehen.

3. Magnetspannfutter nach Anspruch 2, **dadurch gekennzeichnet, dass** der Keilstangenmechanismus handbetätigt oder kraftbetätigt ist.

4. Magnetspannfutter nach einem der Ansprüche 1 oder 2, **dadurch gekennzeichnet, dass** der Stellmechanismus kraftbetätigt ist, wobei die Zentrierbacken (9) mit einem zentral in dem Futterkörper (2) angeordneten und parallel zur Futterlängsachse (X) verstellbaren Kolben (18) in der Weise gekoppelt sind, dass eine Axialbewegung des Kolbens (18) in eine Radialbewegung der Zentrierbacken (9) umgesetzt wird.

5. Magnetspannfutter nach Anspruch 4, **dadurch gekennzeichnet, dass** die Grundbacken (9a) in ihrer Längsrichtung unterteilt sind in ein erstes Grundbackenelement (24), welches Kopplungsmittel (22) zur Verbindung mit dem Kolben (18) trägt, und ein zweites Grundbackenelement (25), welches die Aufsatzbacke (9b) trägt, wobei die beiden Grundbackenelemente (24, 25) in der Weise miteinander gekoppelt sind, dass sie zum Ausgleich von Fertigungstoleranzen relativ zueinander verstellt und/oder verschwenkt und/oder verkippt werden können.

6. Magnetspannfutter nach Anspruch 5, **dadurch gekennzeichnet, dass** die beiden Grundbackenelemente (24, 25) durch einen Gelenkbolzen (28) schwenkbar ineinander verbunden sind, welcher in die Grundbackenelemente (24, 25) etwa parallel zur Futterachsrichtung eingesetzt ist.

7. Magnetepannfutter nach einem der Ansprüche 4 bis 6, **dadurch** gekenntzeichnet, dass der Kolben (18) in einem Pneumatik- oder Hydraulikzylinder (16) verschiebbar angeordnet ist, der in eine zentralen Bohrung (17) des Futterkörpers (2) von dessen Unterseite her eingesetzt und darin fixiert, insbesondere eingeschraubt ist.

8. Magnetspannfutter nach Anspruch 7, **dadurch gekennzeichnet, dass** der Kolben (18) an seinem aus dem Pneumatik- bzw. Hydraulikzylinder (16) heraus ragenden Ende einen Kolbenfortsatz (20) trägt, der mit dem Kolben (18) lösbar verbunden, insbesondere verschraubt ist, und der Kolbenfortsatz (20) mit den Zentrierbacken (9) gekoppelt ist.

9. Magnetspannfutter nach Anspruch 8, **dadurch gekennzeichnet, dass** das Kolbenfortsatz (20) in einem Zylinderdeckel (21) verschiebbar gehalten ist, der in die zentrale Bohrung (17) des Futterkörpers (2) von dessen Oberseite her eingesetzt und darin fixiert, insbesondere eingeschraubt ist.

10. Magnetspannfutter mit einem Futterkörper (2), der an seiner vorderen Stirnseite eine Spannfläche für ein zu fixierendes Bauteil aufweist, und mit Stirnseite elektromagnetischen Spannmitteln (3) zur Fixierung eines Bauteils an der Spannfläche, wobei Zentriermittel vorgesehen sind, um ein Bauteil relativ zu einer zentralen Futterachse (X)des Magnetspannfutters zu zentrieren, wobei in der Spannfläche zwischen den elektromagnetischen Spannmitteln (3) mehrere radial zu der Futterlängsachse (X) ausgerichtete Führungsnuten (8) ausgebildet sind, in denen Zentrierbacken (9) radial verschiebbar geführt sind, wobei die Zentrierbacken 89) durch einen Stellmechanismus gemeinsam verstellt werden können, **dadurch gekennzeichnet, dass** der Stellmechanismus kraftbetätigt ist, wobei die Zentrierbacken (9) mit einem zentral in dem Futterkörper (2) angeordneten und parallel zur Futterlängsachse (X) verstellbaren Kolben (18) in der Weise gekoppelt sind, dass eine Axialbewegung des Kolbens (18) in eine Radialbewegung der Zentrierbacken (9) umgesetzt wird, dass die Zentrierbacken (9) jeweils eine im Futterkörper (2) geführte Grundbacke (9a) und eine die Zentrierfläche aufweisende Aufsatzbacke (9b) aufweisen, und dass die Grundbacken (9a) in ihrer Längsrichtung unterteilt sind in ein erstes Grundbackenelement (24), welches Kopplungsmittel (22) zur Verbindung mit dem Kolben (18) trägt, und ein zweite Grundbackenelement (25), welches die Aufsatzbacke (9b) trägt, wobei die beiden Grundbackenelemente (24, 25) in der Weise miteinander gekoppelt sind, dass sie zum Ausgleich von Fertigungstoleranzen relativ zueinander verstellt und/oder verschwenkt und/oder verkippt werden können.

## Claims

1. A magnetic chuck comprising a chuck body (2) which has a clamping surface for a component which is to be fixed on its front face side, and comprising electromagnetic clamping means (3) for fixing a component onto the clamping surface, centring means being provided in order to centre a component relative to a central chuck axis (X) of the magnetic chuck, wherein there are formed in the clamping surface between the electromagnetic clamping means (3) at least three guide grooves (8) arranged with the same angular offset in relation to one another and aligned radially to the longitudinal axis (X) of the chuck, in which centring jaws (9) are guided for radial displacement, it being possible to adjust the centring jaws (9) together by means of a positioning mechanism and the centring jaws (9) respectively have a base jaw (9a) guided in the chuck body (2) and a top jaw (9b) having the centring surface, wherein the top jaws (9b) form on their radially inwardly facing sides a centring face (10) and in addition have a projection (31) projecting radially inwardly, that carries on its upper side facing away from the clamping surface an upwardly projecting pin (32) which, when externally processing a workpiece, can be positioned close to the inner surface of the latter in order to secure the workpiece against displacement.

2. The magnetic chuck according to Claim 1, **characterised in that** the positioning mechanism is in the form of a wedge bar mechanism, the wedge bar mechanism having wedge bars which are guided in pockets of the chuck body (2) provided below the guide grooves (8) for the centring jaws (9), and engage with the centring jaws (9) by means of corresponding teeth or similar.

3. The magnetic chuck according to Claim 2, **characterised in that** the wedge bar mechanism is manually or power operated.

4. The magnetic chuck according to Claim 1 or 2, **characterised in that** the positioning mechanism is power operated, the centring jaws (9) being coupled to a piston (18) disposed centrally in the chuck body (2) and adjustable parallel to the longitudinal axis (X) of the chuck in such a way that an axial movement of the piston (18) is converted into a radial movement of the centring jaws (9).

5. The magnetic chuck according to Claim 4, **characterised in that** the base jaws (9a) are sub-divided in their longitudinal direction into a first base jaw element (24), which carries coupling means (22) for connecting to the piston (18), and a second base jaw element (17) which carries the top jaw (6b), the two base jaw elements (16, 17) being coupled to one another in such a way that they can be adjusted and/or pivoted and/or tilted relative to one another in order to compensate production tolerances.

6. The magnetic chuck according to Claim 5, **characterised in that** the two base jaw elements (24, 25) are connected to one another pivotably by a hinge bolt (28) which is inserted into the base jaw elements (24, 25) approximately parallel to the direction of the chuck axis.

7. The magnetic chuck according to any of Claims 4 to 6, **characterised in that** the piston (18) is disposed displaceably in a pneumatic or hydraulic cylinder (16) which is inserted into a central bore hole (17) of the chuck body (2) from the lower side of the latter, and is fixed, in particular screwed into, the latter.

8. The magnetic chuck according to Claim 7, **characterised in that** the piston (18) carries a piston extension (20) on its end projecting out of the pneumatic or hydraulic cylinder (16) which is connected detachably, in particular is screwed, to the piston (18), and the piston extension (20) is coupled to the centring jaws (9).

9. The magnetic chuck according to Claim 8, **characterised in that** the piston extension (20) is held displaceably in a cylinder cover (21) which is inserted into the central bore hole (17) of the chuck body (2) from the upper side of the latter and is fixed, in particular screwed into, the latter.

10. A magnetic chuck comprising a chuck body (2) which has a clamping surface for a component which is to be fixed on its front face side, and comprising electromagnetic clamping means (3) for fixing a component onto the clamping surface, centring means being provided in order to centre a component relative to a central chuck axis (X) of the magnetic chuck, wherein there are formed in the clamping surface between the electromagnetic clamping means (3) a number of guide grooves (8) aligned radially to the longitudinal axis (X) of the chuck, in which centring jaws (9) are guided for radial displacement, it being possible to adjust the centring jaws (9) together by means of a positioning mechanism, **characterized in that** the positioning mechanism is power operated, the centring jaws (9) being coupled to a piston (18) disposed centrally in the chuck body (2) and adjustable parallel to the longitudinal axis (X) of the chuck in such a way that an axial movement of the piston (18) is converted into a radial movement of the centring jaws (9), that the centring jaws (9) respectively have a base jaw (9a) guided in the chuck body (2) and a top jaw (9b) having the centring surface, and that the base jaws (9a) are sub-divided in their longitudinal direction into a first base jaw element (24), which carries coupling means (22) for connecting to the piston (18), and a second base jaw element (17) which carries the top jaw (6b), the two base jaw elements (16, 17) being coupled to one another in such a way that they can be adjusted and/or pivoted and/or tilted relative to one another in order to compensate production tolerances.

## Revendications

1. Mandrin à serrage magnétique avec un corps de mandrin (2) qui présente sur son côté frontal avant une surface de serrage pour un élément de construction à fixer et avec des outils de serrage électromagnétique (3) pour la fixation d'un élément de construction sur la surface de serrage, sachant que des moyens de centrage sont prévus pour centrer un élément de construction relativement par rapport à un axe de mandrin (X) central du mandrin à serrage magnétique sur la surface de serrage entre les outils de serrage électromagnétiques (3), au moins trois rainures de guidage (8) placées avec la même déformation angulaire les unes par rapport aux autres et alignées de manière radiale par rapport à l'axe longitudinal de mandrin (X) sont formées, dans lesquelles des mors de centrage (9) sont guidés de manière radiale de manière mobile, sachant que les mors de centrage (9) peuvent être ajustés ensemble par une unité de commande, sachant que les mors de serrage (9) présentent respectivement un mors de base (9a) guidé dans le corps de mandrin (2) et un mors rapporté (9b) présentant la surface centrale, les mors rapportes (9b) formants une face de centrage à leurs surfaces intérieurs et en addition ayants une projection (31) projectante vers l'intérieure radiale, laquelle port sur son côté supérieur un pivot (32) faisant saillie vers le haut, qui lors de l'usinage externe d'une pièce à usiner, peut être positionné à proximité de sa surface interne pour sécuriser la pièce à usiner contre les déplacements.

2. Mandrin à serrage magnétique selon la revendication 1, **caractérisé en ce que** l'unité de commande est conçue en tant que mécanisme de barre en coin, sachant que le mécanisme de barre en coin comporte des barres en coin, qui sont guidées dans des poches du corps de mandrin (2) prévues pour les mors de centrage (9) en dessous des rainures de guidage (8) et sont en prise par des engrenages correspondants ou similaires avec les mors de centrage (9).

3. Mandrin à serrage magnétique selon revendication 2, **caractérisé en ce que** le mécanisme de barre en coin est actionné manuellement ou par une source d'énergie extérieure.

4. Mandrin à serrage magnétique selon la revendication 1 ou 2, caractérisé ce que l'unité de commande est actionnée par une source d'énergie extérieure, sachant que les mors de centrage (9) sont couplés à un piston (18) réglable placé centralement dans le corps de mandrin (2) et parallèlement à l'axe longitudinal de mandrin (X), de manière à ce qu'un mouvement axial du piston (18) soit transformé en un mouvement radial des mors de centrage (9).

5. Mandrin à serrage magnétique selon revendication 4, **caractérisé en ce que** les mors de base (9a) sont subdivisés dans leur sens longitudinal dans un premier élément de mors de base (24), qui porte un moyen d'accouplement (22) pour le raccordement avec le piston (18) et un deuxième élément de mors de base (17) qui porte le mors rapporté (6b), sachant que les deux éléments de mors de base (16, 17) sont couplés l'un avec l'autre de manière à pouvoir être ajustés et / ou basculés et / ou pivotés relativement l'un par rapport à l'autre pour l'équilibrage de tolérances de production.

6. Mandrin à serrage magnétique selon revendication 5, **caractérisé en ce que** les deux éléments de mors de base (24, 25) sont reliés l'un à l'autre de manière à pouvoir être orientés par un axe d'articulation (28), qui est inséré dans les éléments de mors de base (24, 25) pratiquement parallèlement au sens d'axe du mandrin.

7. Mandrin à serrage magnétique selon l'une des revendications 4 à 7, **caractérisé en ce que** le piston (18) est placé de manière amovible dans un cylindre pneumatique ou hydraulique (16), qui est logé par son côté inférieur dans un alésage central (17) du corps de mandrin (2) et y est fixé, notamment vissé à l'intérieur.

8. Mandrin à serrage magnétique selon revendication 7, **caractérisé en ce que** le piston (18) porte sur son extrémité sortant du cylindre pneumatique ou hydraulique (16) un prolongement de piston (20) qui est relié au piston (18) de manière amovible, notamment vissé et le prolongement de piston (20) est couplé avec les mors de centrage (9).

9. Mandrin à serrage magnétique selon revendication 8, **caractérisé en ce que** le prolongement de pison (20) est maintenu de manière mobile dans un couvercle de cylindre (21), qui est inséré par son côté supérieur dans l'alésage central (17) du corps de mandrin (2) et y est fixé, notamment vissé.

10. Mandrin à serrage magnétique avec un corps de mandrin (2) qui présente sur son côté frontal avant une surface de serrage pour un élément de construction à fixer et avec des outils de serrage électromagnétique (3) pour la fixation d'un élément de construction sur la surface de serrage, sachant que des moyens de centrage sont prévus pour centrer un élément de construction relativement par rapport à un axe de mandrin (X) central du mandrin à serrage magnétique, sachant que sur la face de serrage entre les outils de serrage électromagnétique (3) sur rainures de guidage (8) aligné des manier radial par rapport à l'axe longitudinal de mandrin (X) sont formées, dans lesquelles des mors de centrage (9) sont guidés de manière radiale de manière mobile, sachant que les mors de centrage (9) peuvent être ajustés ensemble par une unité de commande, **caractérisé en ce que** l'unité de commande est actionnée par une source d'énergie extérieure, sachant que les mors de centrage (9) sont couplés à un piston (18) réglable placé centralement dans le corps de mandrin (2) et parallèlement à l'axe longitudinal de mandrin (X), de manière à ce qu'un mouvement axial du piston (18) soit transformé en un mouvement radial des mors de centrage (9), les mors de serrage (9) présentent respectivement un mors de base (9a) guidé dans le corps de mandrin (2) et un mors rapporté (9b) présentant la surface centrale, et les mors de base (9a) sont subdivisés dans leur sens longitudinal dans un premier élément de mors de base (24), qui porte un moyen d'accouplement (22) pour le raccordement avec le piston (18) et un deuxième élément de mors de base (17) qui porte le mors rapporté (6b), sachant que les deux éléments de mors de base (16, 17) sont couplés l'un avec l'autre de manière à pouvoir être ajustés et / ou basculés et / ou pivotés relativement l'un par rapport à l'autre pour l'équilibrage de tolérances de production.
